# EUROPEAN PATENT APPLICATION

(11) **EP 4 703 097 A1**
(43) Date of publication of application: **04.03.2026**
(21) Application number: 25196044.9
(22) Date of filing: 14.08.2025
(51) Int. Cl.: B25J 13/08, B25J 19/00, B25J 19/02

(54) **ROBOT**

(30) Priority: 29.08.2024 JP 2024147549
(71) Applicant: The University of Tokyo, Bunkyo-ku, Tokyo 113-8654 (JP); Nachi-Fujikoshi Corp., Tokyo 105-0021 (JP)
(72) Inventor: YAMAMOTO, Akio, Tokyo, 113-8654 (JP); OKUNO, Akira, Tokyo, 113-8654 (JP); ONO, Jotaro, Tokyo, 930-8511 (JP)
(74) Representative: Plougmann Vingtoft a/s

(57) **Abstract**

Provided is a robot (2) that can prevent a drop in the detection accuracy of a capacitive sensor (4) due to a cable (22, 62). The robot (2) includes a housing (20, 60) constituting a fourth arm (A4), a detection electrode (8d, 66d) that is disposed on the housing (20, 60) and constitutes a capacitive sensor (4), and a shield member (27, 68) that is located between the housing (20, 60) and the detection electrode (8d, 66d) and has a conduit (33, 73) through which a cable (22, 62) leading from outside a space between the housing (20, 60) and the detection electrode (8d, 66d) to inside the space passes.

## Description

### Technical Filed

The present invention relates to a robot equipped with a capacitive sensor.

### Background Art

There are cases where humans and robots collaboratively work on a workpiece. The robots used in such situations are called collaborative robots. Some collaborative robots are equipped with a capacitive sensor for detecting humans and other objects nearby.

Cables are routed throughout the body of a robot. Japanese Patent No. 6299962 describes that a cable routed in a cable accommodation portion is drawn from an opening out to the outside space of the robot arm and then routed to a wrist of the robot through another opening.

### Summary

### Technical Problem

If a robot arm is equipped with a capacitive sensor, cables can interfere with the capacitive sensor, causing the detection accuracy of the capacitive sensor to deteriorate.

The present invention provides a robot that can prevent compromise of the detection accuracy of a capacitive sensor caused by the influence of the cable.

### Solution to Problem

To solve the foregoing problem, a robot according to the present invention includes a housing forming an exterior of an arm, a detection electrode that is disposed in the housing and functions as a capacitive sensor, and a shield member that is located between the housing and the detection electrode and has a passage through which a cable extends from the outside of a space between the housing and the detection electrode to the inside of the space passes.

In the robot according to the present invention, a cutout is formed at an end of an electrode surface of the detection electrode, and the cable extends through the passage via the cutout.

The robot according to the present invention further includes a circuit board that is located between the shield member and the detection electrode and constitutes a part of the capacitive sensor.

In the robot according to the present invention, the passage opens toward the detection electrode. The robot further includes a cover member disposed to cover the opening to provide electromagnetic shielding.

The robot according to the present invention further comprises a first insulating member, an active shield, and a second insulating member that are collectively attached to the detection electrode, and the first insulating member, the active shield, the second insulating member, and the detection electrode are formed in layers in this order from the side of the housing.

In the robot according to the present invention, the housing has a hole, and the cable extends from the inside of the space to the outside of the space via the passage and through the hole.

### Advantageous Effect of Invention

According to the robot of the present invention, compromise of the detection accuracy of the capacitive sensor caused by influence of the cable can be prevented.

### Brief Description of the Drawings

Fig. 1 is a perspective view schematically showing an example of an overall configuration of a robot including a capacitive sensor according to a first embodiment of the present invention;
Fig. 2 is an enlarged view showing an example of a specific configuration of a fourth arm in Fig. 1;
Fig. 3 is an exploded perspective view showing an exemplary internal configuration of the fourth arm of Fig. 2;
Fig. 4 is an exploded perspective view showing an exemplary configuration of a detection electrode in Fig. 3;
Fig. 5 is an exploded perspective view showing an example of a cover member in the fourth arm of Fig. 3;
Fig. 6 is a diagram showing an example of routing a cable in the fourth arm of Fig. 2;
Fig. 7 is an exploded perspective view showing an exemplary internal configuration of the fourth arm according to a second embodiment of the present invention;
Fig. 8 is an exploded perspective view showing an exemplary configuration of a detection electrode in Fig. 7; and
Fig. 9 is a diagram showing an example of routing the cable in the fourth arm of Fig. 7.

### Detailed Description of Embodiments

Hereinafter, an embodiment of the present invention will be described with reference to the accompanying drawings. In order to facilitate understanding of the invention, the same components in each drawing will be denoted with the same reference numerals where possible, and duplicate descriptions will be omitted where appropriate.

### === First Embodiment ===

A first embodiment will be described.

### Overall Configuration:

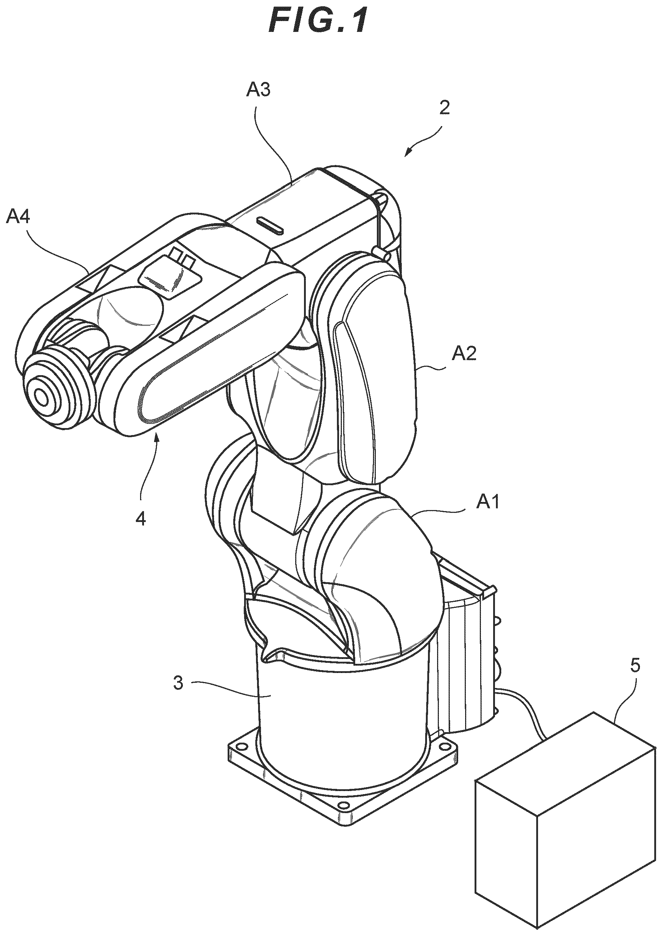

Fig. 1 is a perspective view schematically showing an overall configuration of an exemplary robot 2 equipped with a capacitive sensor, according to the first embodiment of the present invention.

The robot 2 is an industrial robot that performs processing on workpieces such as machining and transportation of workpieces. For example, the robot 2 is a collaborative robot that carries out work in a workspace shared by a human worker.

As shown in Fig. 1, the robot 2 is an articulated robot and includes a plurality of arms and a plurality of joints. Specifically, the robot 2 includes a base 3, a first arm A1, a second arm A2, a third arm A3, and a fourth arm A4. The robot 2 also includes a sensor 4, and is connected to a control apparatus 5.

The base 3 is the foundation of the robot 2. The base 3 is fixed to the floor surface or a wall surface, and supports the entire robot 2. The first arm A1 is connected to the base 3 via a rotating shaft. The first arm A1 rotates about the rotating shaft relative to the base 3 by a motor (not shown). Like the first arm A1, the second, third, and fourth arms A2, A3, and A4 also rotate about their respective rotating shafts by motors (not shown). An end effector is attached to the distal end of the fourth arm A4. The robot 2 performs predetermined operations by moving the joints. The number of arms included in the robot 2 is not limited to any particular number.

The sensor 4 is a capacitive sensor configured to detect an object such as a human. In the present embodiment, the term "an object" is given a broad range of connotations that include objects such as humans and workpieces. Specifically, the sensor 4 detects an object in a close proximity. The sensor 4 may be characterized as detecting a displacement of objects.

The sensor 4 is disposed on the arm of the robot 2. The present embodiment will be described with the sensor 4 disposed on the fourth arm A4, for example. The location at which the sensor 4 is disposed on the robot 2 is not limited to a particular location.

The control apparatus 5 is an information processing apparatus that controls the operation of the robot 2. The control apparatus 5 controls the robot 2 to perform preprogrammed tasks by operating the arms of the robot 2. For example, the control apparatus 5 controls the robot 2 to perform a preprogrammed task of gripping a workpiece and transporting the gripped workpiece from one location to another.

The control apparatus 5 also halts the operation of the robot 2 on the basis of an output of the sensor 4. Specifically, the control apparatus 5 compares the output of the sensor 4 with a threshold, determines if any object is situated in a close proximity to the robot 2, places the operation of the robot 2 on hold. For example, the control apparatus 5 halts the operation of the robot 2 even in the middle of a preprogrammed task. The control apparatus 5 may take an option to decelerate the operation of the robot 2, in addition to placing the operation of the robot 2 on hold.

### Exemplary Configuration of Arm Equipped with Sensor 4:

Next, an exemplary configuration of the arm equipped with the sensor 4 will be described. Here, the following description takes the fourth arm A4 as an exemplary arm of the robot 2 equipped with the sensor 4.

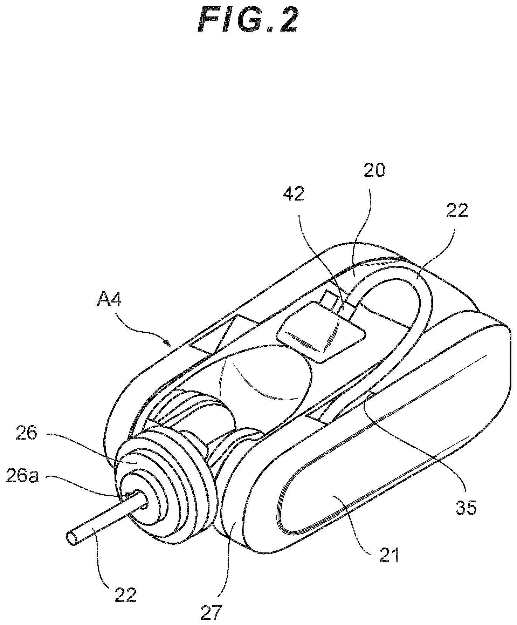

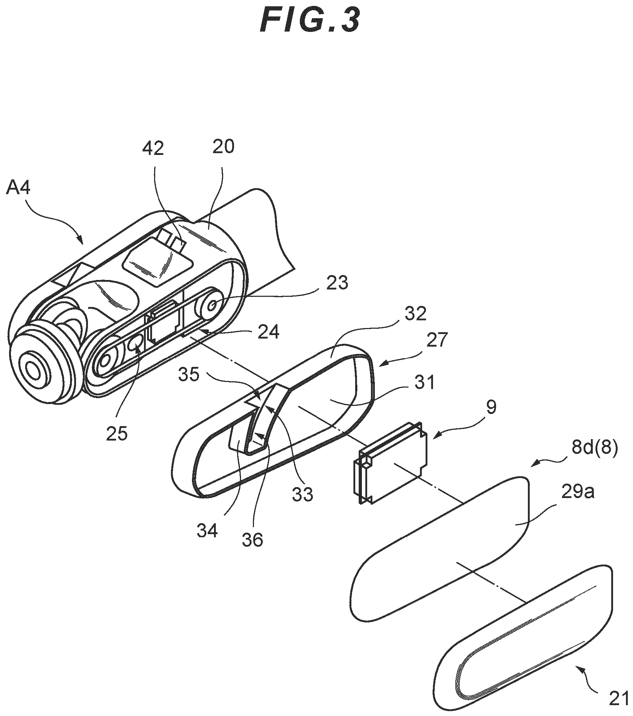

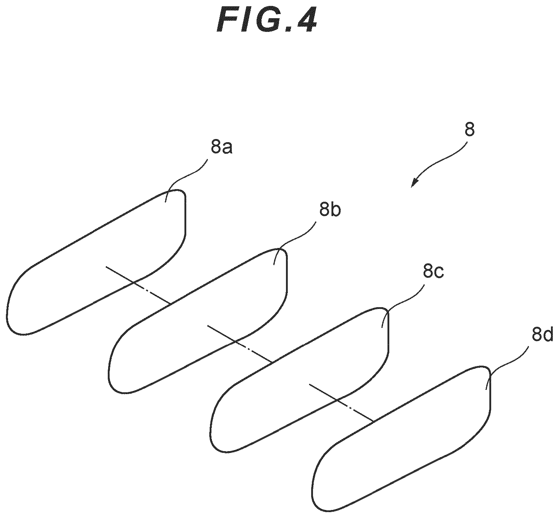

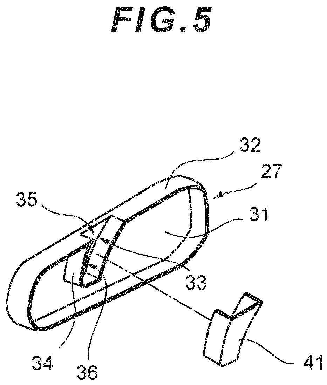

Fig. 2 is an enlarged view showing an exemplary configuration of the fourth arm A4 of Fig. 1. Fig. 3 is an exploded perspective view showing an internal configuration of the fourth arm A4 of Fig. 2. Fig. 4 is an exploded perspective view showing an exemplary configuration of a detection electrode 8d of Fig. 3. Fig. 5 is an exploded perspective view showing an exemplary cover member 41 attached to the fourth arm A4 of Fig. 3.

As shown in Fig. 2, the exterior of the fourth arm A4 is constructed with a housing 20, forming the fourth arm A4, and a cover 21. The fourth arm A4 is provided with a cable 22.

As shown in Fig. 3, the housing 20 accommodates components such as a motor 23 for operating the robot 2 and wirings. Other components are also present inside the fourth arm A4. The housing 20 is made of a metal material and electrically connected to the ground (the reference potential). The housing 20 has a chamber 24. The chamber 24 is formed in the side surface of the fourth arm A4, for example. The housing 20 has a hole 25. The hole 25 is formed to extend through the housing 20 to establish communication between the inside and outside of the housing 20. The hole 25 is located away from the detection electrode 8d, as described below. This configuration functions to suppress interference on the detection electrode 8d by the cable 22 passing through the hole 25, as described below. As shown in Fig. 2, a wrist unit 26 is provided to the housing 20. The wrist unit 26 is equipped with an end effector, for example. The wrist unit 26 has a hole 26a.

The cover 21 is installed with one of its surfaces facing the chamber 24 of the housing 20, and the cover 21 is also connected to the housing 20 with a shield member 27, described below, a layered structure 8 and a circuit board 9 arranged therebetween. The cover 21 is made of a resin material. The cover 21, since being made of a resin material, does not interfere with an electric field generated by the detection electrode 8d, described below, of the layered structure 8, and thus the sensor 4 can detect an object in an undisturbed environment.

The exterior of the fourth arm A4 is formed as described above by the housing 20 and the cover 21.

The cable 22 is a wiring cable or the like provided for the operation of the robot 2. Specifically, the cable 22 is a wiring cable or the like provided for the operation of a tool hand or the like that is attached to the distal end of the robot 2. Examples of the cable 22 include a feed line and a signal line. For example, the cable 22 is connected to a terminal 42 of the housing 20. The cable 22 may extend out from an other section than the terminal 42. the terminal 42 may be connected to an air tube, ither than the wiring cable 22.

As shown in Fig. 3, the fourth arm A4 accommodates the sensor 4 inside, which is formed with the detection electrode 8d, the circuit board 9, and the shield member 27. The detection electrode 8d constitutes a part of the layered structure 8, as described below.

The detection electrode 8d is an electrode that is placed in the housing 20 and constitutes a part of the sensor 4. The detection electrode 8d generates an electric field and detects an object that enters the range of the generated electric field. The detection electrode 8d directs the electric field in the direction toward the cover 21. The detection electrode 8d forms a capacitance between itself and the object. The formed capacitance exhibits a different value depending on the distance between the detection electrode 8d and the object. The capacitance formed between the object and the detection electrode 8d is detected by the circuit board 9.

The detection electrode 8d is located between the housing 20 and the cover 21. Specifically, the detection electrode 8d is located between the shield member 27 and the cover 21. The detection electrode 8d is protected from the external environment by the cover 21. For example, the cover 21 prevents dirt from coming onto the detection electrode 8d.

The detection electrode 8d includes a first surface 29a that is an electrode surface facing the cover 21.

The detection electrode 8d constitutes a part of the layered structure 8. Specifically, as shown in Fig. 4, the layered structure 8 is formed with layers of a first insulating member 8a, an active shield 8b, a second insulating member 8c, and the detection electrode 8d. Specifically, the active shield 8b is located on the side of the housing 20 from the detection electrode 8d with the second insulating member 8c therebetween. An example of the second insulating member 8c includes an insulating film (polyimide film). The second insulating member 8c prevents the detection electrode 8d from coming in contact with other members such as the active shield 8b. The active shield 8b is subjected to a potential equivalent to that of the detection electrode 8d. The equivalent potential of the active shield 8b prevents a capacitance from being created between the detection electrode 8d and other objects located on side of the housing 20 from the detection electrode 8d. The first insulating member 8a is located on the side of the housing 20 from the active shield 8b. An example of the first insulating member 8a includes an insulating film (polyimide film). The first insulating member 8a prevents the active shield 8b from coming in contact with other members such as the shield member 27. The detection electrode 8d is provided, as described above, with the first insulating member 8a, the active shield 8b, and the second insulating member 8c. In the layered structure 8, the first insulating member 8a, the active shield 8b, the second insulating member 8c, and the detection electrode 8d are layered in this order from the side of the housing 20 (on the side where the shield member 27 is located) toward the cover 21. The first insulating member 8a, the active shield 8b, and the second insulating member 8c, which are attached to the detection electrode 8d, are similarly formed in shape with the detection electrode 8d. The second insulating member 8c and the cover 21 may be integrally formed in one member. In the layered structure 8, a shield (a GND shield) electrically connected to the ground (the reference potential) in the same manner as the housing 20 may be disposed on the side of the housing 20 (the shield member 27 side) from the first insulating member 8a.

Returning to Fig. 3, the circuit board 9 is electrically connected to the detection electrode 8d and constitutes a part of the sensor 4. Specifically, the circuit board 9 includes a circuit for outputting a sensed value resulting from the measured capacitance formed between the detection electrode 8d and an object. For example, the circuit board 9 is equipped with an arbitrary waveform generator, an RC bridge circuit, an instrumentation amplifier, a lock-in amplifier, and an A/D converter. The circuit board 9 may be equipped with all or some of the aforementioned circuit components.

The circuit board 9 is located between the housing 20 and the cover 21. Specifically, the circuit board 9 is located between the shield member 27 and the detection electrode 8d (or the layered structure 8).

with the configuration described above, the sensor 4 outputs a sensed value corresponding to the capacitance created subject to the positional state of the detection electrode 8d and the object (, which is represented by the distance between the two). The specific circuit configuration of the sensor 4 is not limited to that described above as long as a sensed value based on the capacitance formed by the detection electrode 8d is output.

The shield member 27 is located between the housing 20 and the cover 21. Specifically, the shield member 27 is located between the housing 20 and the detection electrode 8d. The shield member 27 is made of a metal material. The shield member 27 is preferably made of the same material as that of the housing 20, for example. The shield member 27 is electrically connected to the housing 20 and subjected to the same potential as that of the housing 20. In other words, like the housing 20, the shield member 27 is electrically connected to the ground (the reference potential). the shield member 27 made as described above functions as an electromagnetic shield.

Specifically, the shield member 27 includes a wall 31 and a first peripheral wall 32. The first peripheral wall 32 is erected from the circumference of the wall 31 in the direction from the wall 31 toward the cover 21. The shield member 27 has a space formed by the wall 31 and the first peripheral wall 32, and the circuit board 9 is placed in the space. For example, the circuit board 9 is fixed to the wall 31 of the shield member 27 with a gap therebetween. The shield member 27 electrically isolates the circuit board 9 from the inside of the housing 20, where the motor 23 and other components are disposed. In other words, the shield member 27 prevents noise generated by the motor 23 and other components in the housing 20 from affecting the circuit board 9. Moreover, the shield member 27 is disposed to close off the chamber 24 of the housing 20. In other words, the shield member 27 prevents noise generated by the motor 23 and other components in the housing 20 from affecting the detection electrode 8d. The shield member 27 thus has a function of not only shielding the circuit board 9 but also shielding the detection electrode 8d.

The shield member 27 has a passage 33 formed to open toward the detection electrode 8d. The passage 33 is formed by the wall 31 and a second peripheral wall 34. The passage 33 provides a path along with the cable 22 is routed as described below. The passage 33 extends from an opening 35 formed in the first peripheral wall 32 to a hole 36 formed in the wall 31. Specifically, the second peripheral wall 34 is erected from the surface of the wall 31 toward the cover 21. The second peripheral wall 34 is continuous through the first peripheral wall 32 at the opening 35, and the bottom end of the second peripheral wall 34 extends around the hole 36.

The passage 33 of the shield member 27 is open at the opening 35, which is not closed by the detection electrode 8d when the fourth arm A4 is assembled. The opening 35 of the passage 33 of the shield member 27 thus constitutes a for a window for communicating with the outside. The hole 36 at the bottom end of the passage 33 of the shield member 27 becomes in alignment with the hole 25 of the housing 20 when the fourth arm A4 is assembled. The bottom end of the passage 33 of the shield member 27 thus constitutes a path for communicating with the outside. In other words, the passage 33 constitutes a path for connecting the inside and outside of the space formed between the housing 20 and the detection electrode 8d (, or the space between the shield member 27 and the detection electrode 8d).

Since the passage 33 of the shield member 27 is formed by the wall 31 and the second peripheral wall 34, the passage 33 opens toward the detection electrode 8d. As shown in Fig. 5, a cover member 41 may be provided to cover the passage 33 on the side of the detection electrode 8d to close the passage 33 for electromagnetic shielding. The cover member 41 is placed in contact with the inner wall of the passage 33 and covers the opening of the passage on the side of the detection electrode 8d. For example, the cover member 41 may be inserted into the passage 33 from the opening 35 of the shield member 27. The cover member 41 is made of a metal material like the shield member 27, for example, and electrically connected to the shield member 27. The cover member 41 thereby shields the detection electrode 8d from the side of the passage 33. The cover member 41 may be omitted.

### Example of Routing Cable 22 on Arm:

Next, exemplary routing of the cable 22 installed in the arm will be described, using the fourth arm A4 as an exemplary arm of the robot 2.

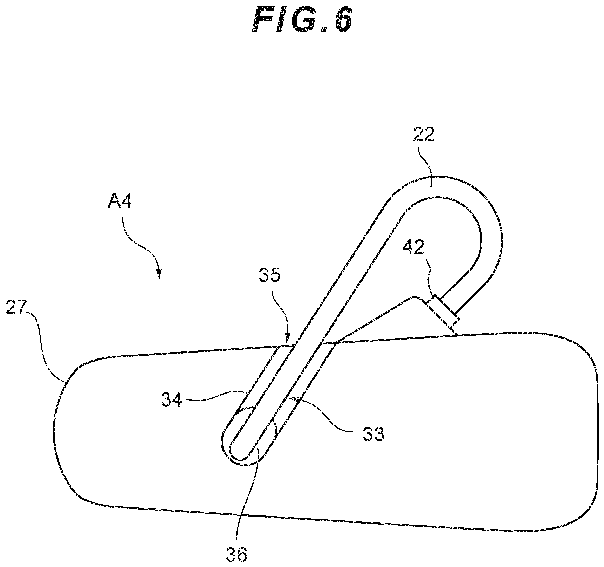

Fig. 6 is a schematic view showing an exemplary routing of the cable 22, which is installed in the fourth arm A4 of Fig. 2. The cable 22 enters the passage 33 from the opening 35 of the passage 33. In other words, the cable 22 is installed through the passage 33. The cable 22 thus extends from the outside of the space formed between the housing 20 and the detection electrode 8d to the inside of the space.

From the passage 33, the cable 22 passes through the hold 36 formed at the bottom end of the passage 33 and then passes through the hole 25 of the housing 20. The cable 22 thus extends from the inside of the space between the housing 20 and the detection electrode 8d into the outside of the space. Accordingly, the cable 22 extends from the outside of the space between the housing 20 and the detection electrode 8d into the inside of the space through the opening 35 of the shield member 27, and from the inside of the space into the outside of the space through the hole 25. The cable 22 then passes through the hole 26a of the wrist unit 26. The fourth arm A4 has an inner space through which the cable 22 passes.

### Operation and Effects:

As described above, in the present embodiment, the cable 22 passes through the passage 33 to extend from the inside into the outside of the space between the housing 20 and the detection electrode 8d. Since the cable 22 passes through on the inner side of the active shield 8b near the detection electrode 8d, the detection electrode 8d, since located on the outer side of the active shield 8b, does not form a capacitance with the cable 22 on the inner side of the active shield 8b. This configuration prevents the cable 22 from affecting the detection electrode 8d. As a result, the sensor 4 is prevented from erroneously detecting the cable 22 as a human or other objects. In other words, Compromise of the detection accuracy of the sensor 4 due to the detection of the cable 22 can be prevented. Since the cable 22 can pass through the passage 33, the replacement and routing of the cable 22 are facilitated. In other words, the cable 22 can be easily replaced and routed while its influence on the operation of the sensor 4 can be suppressed. Moreover, even when the cable 22 is displaced in the passage 33 by force imposed on the cable 22 caused by wrist movements of the robot 2, for example, the influence on the operation of the sensor 4 is suppressed. Furthermore, routing of the cable 22 can be streamlined, resulting in achieving a more compact apparatus. The shield member 27 shields the detection electrode 8d from noise generated by the motor 23 and other components in the housing 20.

Since the circuit board 9 is located between the shield member 27 and the detection electrode 8d, the shield member 27 can shield both the circuit board 9 and the detection electrode 8d from the noise generated by the motor 23 and other components in the housing 20.

The passage 33, which opens toward the detection electrode 8d, is covered by the cover member 41, which can shield the detection electrode 8d from noise generated by the cable 22 that passes through the passage 33.

Since the active shield 8b is placed for the detection electrode 8d, compromise of the detection accuracy of the detection electrode 8d can be prevented. Further, since the first insulating member 8a and the second insulating member 8c are placed, an insulation among the members can property maintained.

Since the cable 22 extends through the passage 33 of the shield member 27 and the hole 25 of the housing 20 to run through the inside and the outside of the space between the housing 20 and the detection electrode 8d, the cable 22 can thus be placed while suppressed from affecting the sensor 4. The fourth arm A4 is formed to have a hollow structure through which the cable 22 passes.

### === Second Embodiment ===

Next, a second embodiment will be described, in which the cable 22 is routed differently from that in the first embodiment. In other words, the second embodiment differs from the first embodiment in the internal configuration of the arm. A description of the same aspects as those of the first embodiment will be omitted. The second embodiment can be combined with the first embodiment.

### Example of Internal Configuration:

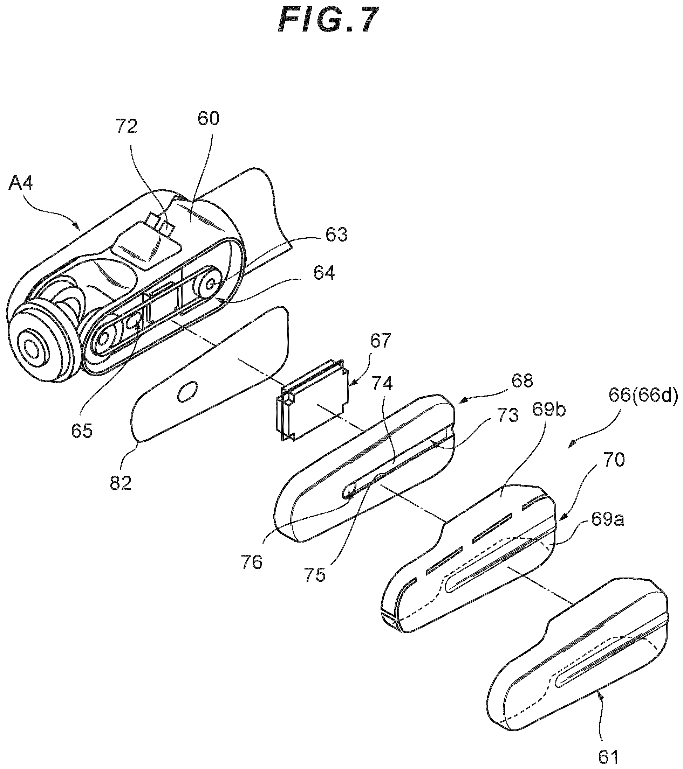

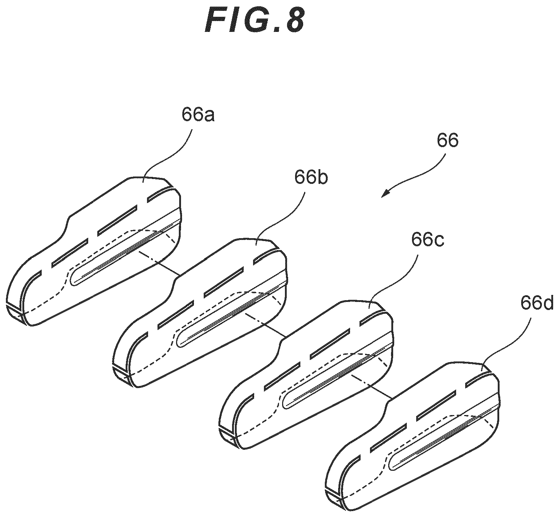

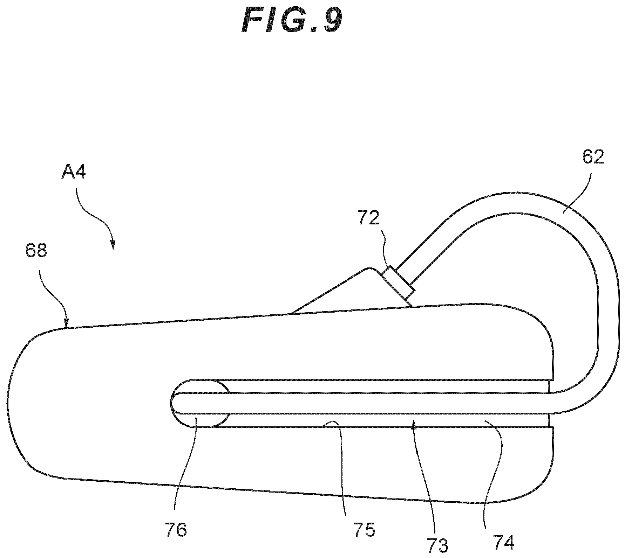

Fig. 7 is an exploded perspective view showing an exemplary internal configuration of the fourth arm A4 according to the present embodiment. Fig. 8 is an exploded perspective view showing an exemplary configuration of members surrounding a detection electrode 66d in Fig. 7. Fig. 9 is a diagram showing an exemplary path of a cable 62 in the fourth arm A4 of Fig. 7.

As shown in Fig. 7, the exterior of the fourth arm A4 includes a housing 60 and a cover 61 forming the fourth arm A4, and. The housing 60 of the present embodiment corresponds to the housing 20 of the first embodiment. The cover 61 corresponds to the cover 21 of the first embodiment. More specifically, like the housing 20, the housing 60 is made of a metal material and electrically connected to the ground (the reference potential). The housing 60 accommodates components inside such as a motor 63 (corresponding to the motor 23), and has a chamber 64 (corresponding to the chamber 24). The housing 60 also has a hole 65 (corresponding to the hole 25) that extends through the housing 60 to establish communication between the inside and the outside of the housing 60. Like the cover 21, the cover 61 is made of a resin material and facing the chamber 64 of the housing 60.

The fourth arm A4 houses the detection electrode 66d, a circuit board 67, and a shield member 68, which constitute the sensor 4. The detection electrode 66d of the present embodiment corresponds to the detection electrode 8d of the first embodiment. The circuit board 67 corresponds to the circuit board 9 of the first embodiment. The shield member 68 corresponds to the shield member 27 of the first embodiment. The detection electrode 66d constitutes a part of a layered structure 66 as described below.

Like the detection electrode 8d, the detection electrode 66d is an electrode that is placed in the housing 60 and constitutes the sensor 4. The detection electrode 66d is protected from the external environment by the cover 61. The detection electrode 66d includes a first surface 69a (corresponding to the first surface 29a) serving as an electrode surface facing the cover 61, and a second surface 69b. The second surface 69b is an electrode surface formed continuously from the first surface 69a and protrudes from the first surface 69a toward the housing 60. Specifically, the second surface 69b protrudes from the circumference of the rim of the first surface 69a toward the housing 60. The first surface 69a and the second surface 69b are integrally formed as an electrode. In the present embodiment, the detection electrode 66d includes not only the first surface 69a but also the second surface 69b. This configuration can increase the detection range of the detection electrode 66d.

The second surface 69b has a cutout 70 formed therein. The cutout 70 forms a portion that lacks an electrode surface of the second surface 69b in the direction in which the second surface 69b protrudes with respect to the first surface portion 69a. In other words, the cutout 70 may be considered to form a recess formed in the second surface 69b. The detection electrode 66d thus has the cutout 70 in the rim (the second surface 69b) of the electrode surface (the first and second surface portions 69a and 69b).

The detection electrode 66d constitutes a part of the layered structure 66. Specifically, as shown in Fig. 8, the layered structure 66, like the layered structure 8, is formed with layers of a first insulating member 66a (corresponding to the first insulating member 8a), an active shield 66b (corresponding to the active shield 8b), a second insulating member 66c (corresponding to the second insulating member 8c), and the detection electrode 66d. More specifically, in the layered structure 66, the first insulating member 66a, the active shield 66b, the second insulating member 66c, and the detection electrode 66d are layered from the side of the housing 60 (the side of the shield member 68) toward the cover 61. Examples of the first and second insulating members 66a and 66c include insulating films (polyimide films). The first insulating member 66a prevents the active shield 66b from coming in contact with other members. The active shield 66b is subjected to a potential equivalent to that of the detection electrode 66d, whereby a capacitance is prevented from forming between the detection electrode 66d and other objects on the side of the housing 60 of the detection electrode 66d. The second insulating member 66c prevents the detection electrode 66d from coming in contact with other members. The first insulating member 66a, the active shield 66b, and the second insulating member 66c, which are attached to the detection electrode 66d, are similarly formed in shape with the detection electrode 66d. The first insulating member 66a, the active shield 66b, and the second insulating member 66c are formed to have a cutout that coincides with the cutout 70 of the detection electrode 66d.

Like the circuit board 9, the circuit board 67 is electrically connected to the detection electrode 66d and constitutes a part of the sensor 4. Specifically, the circuit board 67 includes a circuit for outputting a sensed value resulting from the capacitance formed between the detection electrode 66d and an object.

Like the shield member 27, the shield member 68 is made of a metal material and electrically connected to the ground (the reference potential), and functions as an electromagnetic shield. The shield member 68 prevents noise generated by the motor 63 and other components in the housing 60 from affecting the detection electrode 66d.

A passage 73 is formed in the surface of the shield member 68 on the side of the detection electrode 66d. The passage 73 of the present embodiment corresponds to the passage 33 of the first embodiment. The passage 73 is formed by a bottom wall 74 and a side wall 75, and constitutes a path for the cable 62 to run through as described below. When the fourth arm A4 is assembled, one end of the passage 73 is not closed by the detection electrode 66d and opens in communication with the outside via the cutout 70 of the detection electrode 66d. The one end of the passage 73 in the shield member 68 thus constitutes a path leading to the outside. The other end of the passage 73 in the shield member 68 communicates with a hole 76 formed in alignment with the hole 65 in the housing 60 when the fourth arm A4 is assembled. The other end of the passage 73 in the shield member 68 thus constitutes a path leading to the outside. In other words, the passage 73 constitutes a path that connects the inside and the outside of the space between the housing 60 and the detection electrode 66d.

Since the passage 73 of the shield member 68 opens toward the detection electrode 66d, a cover member (corresponding to the cover member 41) may be provided that covers the opening for electromagnetic shielding. The cover member is in contact with the inner wall of the passage 73 and closes the opening of the passage 73. The cover member is made of a metal material and electrically connected to the shield member 68, whereby the detection electrode 66d is shielded from the side of the passage 73. In other words, the cover member serves as a GND shield. An additional active shield may be provided on the surface of the cover member on the side of the detection electrode 66d.

The present embodiment includes a partition 82. The partition 82 is made of a metal material, and like the housing 60, electrically connected to the ground (the reference potential). The partition 82 shields the circuit board 67 and the detection electrode 66d from noise generated by the motor 63 and other components in the housing 60.

The fourth arm A4 is constructed with the members described above as shown in Fig. 7. Specifically, the partition 82, the circuit board 67, the shield member 68, the detection electrode 66d (the layered structure 66), and the cover 61 are attached to the housing 60 in this order.

### Example of Routing Cable 62 in Arm:

Next, an exemplary route of the cable 62 installed in the arm will be described, using the fourth arm A4 as an example of an arm of the robot 2.

Fig. 9 is a diagram showing an example of routing the cable 62 in the assembled fourth arm A4 of Fig. 7. Like the cable 22, the cable 62 according to the present embodiment is a wiring cable or the like provided for the operation of the robot 2, and is connected to a terminal 72 (corresponding to the terminal 42) of the housing 60, for example. The cable 62 passes through the cutout 70 of the detection electrode 66d and runs through the passage 73 of the shield member 68. In other words, the cable 62 is disposed through the passage 73. The cable 62 thus extends from the outside of the space between the housing 60 and the detection electrode 66d to the inside of the space. The cable 62 then passes through the hole 65 of the housing 60 from the passage 73 via the hole 76 of the shield member 68. As a result, the cable 62 extends from the inside of the space between the housing 60 and the detection electrode 66d to the outside the space. The cable 62 thus extends from the outside of the space between the housing 60 and the detection electrode 66d to the inside of the space through the cutout 70, and from the inside of the space to the outside of the space through the hole 65.

### Operation and Effects:

As described above, in the present embodiment, the cutout 70 is formed in the electrode surface of the detection electrode 66d, and the cable 62 runs through the passage 73 (the space between the housing 60 and the detection electrode 66d) through the cutout 70. Since the cable 62 passes on the inner side near the detection electrode 66d, the cable 62 is prevented from affecting the detection electrode 66d. In other words, compromise of the detection accuracy of the sensor 4 due to influence from the cable 62 can be prevented. Since the cable 62 can pass through the passage 73, replacement and routing of the cable 62 are facilitated. In other words, the cable 62 can be easily replaced and routed while the influence on the operation of the sensor 4 is suppressed. Moreover, even when wrist movements of the robot 2 cause a force on the cable 62 to displace inside the passage 73, the influence on the sensor 4 is suppressed. Furthermore, since the cable 62 passes through the cutout 70 into the inside, a wide electrode surface is realized, which can increase the detection range of the detection electrode 66d. For example, the first surface 69a along with the second surface 69b can increase the detection range.

### === Modifications ===

The present disclosure is not limited to the foregoing embodiments. In other words, modifications made by those skilled in the art through appropriate design changes to the foregoing specific examples are also included in the scope of the present invention as long as such modifications maintain the characteristics of the present invention. The elements of the foregoing embodiments and modifications as described below can be combined where technically feasible. Such combinations are also included in the scope of the present invention as long as the combinations maintain the characteristics of the present invention.

For example, in the foregoing embodiments, the cover 21 (or the cover 61) is made of a resin material, for example. However, the material of the cover 21 (or cover 61) is not limited to a resin material.

In the foregoing embodiments, the shield member 27 (or the shield member 68) is made of the same material as that of the housing 20 (housing 60), for example. However, this is not restrictive. For example, the shield member 27 (or the shield member 68) may be formed by applying a metal coating (or a metal tape) to the surface of a resin member. In other words, as long as the shield member 27 (or the shield member 68) has a shielding function, its specific configuration is not limited to those described above

In the foregoing embodiments, the sensor 4 is installed in the fourth arm A4 of the robot 2, for example. However, the installation location and the number of sensors installed are not limited thereto. For example, the sensor 4 may be installed in each of the first, second, third, and fourth arms A1, A2, A3, and A4. A plurality of sensors 4 may be installed in a single arm.

In the second embodiment, the cutout 70 is formed, for example. However, the location of the cutout 70 is not limited thereto. As long as a cutout shape is formed in the second surface portion 69b, its specific position is not limited.

In the foregoing embodiments, the control apparatus 5 determines whether to halt (or decelerate) the operation of the robot 2, using the output of the sensor 4, for example. However, the determination may instead be made by the circuit board 9 (or the circuit board 67).

In the foregoing embodiments, the cover member 41 or the like is provided to cover the passage 33 (or the passage 73), for example. an active shield may be disposed on the cover member 41, for example.

In the foregoing embodiments, the respective shield members 27 and 68 are illustrated to have specific shapes. The shapes of the shield members 27 and 68 are not limited thereto. The shapes of the passages 33 and 73 in the shield members 27 and 68 are not limited to those described above.

## Claims

1. A robot (2) **characterized by** comprising:
a housing (20, 60) constituting an arm (A1, A2, A3, A4);
a detection electrode (8d, 66d) that is disposed on the housing (20, 60) and constitutes a capacitive sensor (4); and
a shield member (27, 68) that is located between the housing (20, 60) and the detection electrode (8d, 66d) and has a conduit (33, 73) through which a cable (22, 62) leading from outside a space between the housing (20, 60) and the detection electrode (8d, 66d) to inside the space passes.

2. The robot (2) according to claim 1, **characterized in that:**
a cutout (70) is formed in an end of an electrode surface of the detection electrode (66d); and
the cable (62) leads to the conduit (73) via the cutout (70).

3. The robot (2) according to claim 1 or 2, **characterized by** further comprising a circuit board (9) that is located between the shield member (27) and the detection electrode (8d) and constitutes the capacitive sensor (4).

4. The robot (2) according to claim 1 or 2, **characterized in that:**
the conduit (33, 73) is opened up toward the detection electrode (8d, 66d); and
the robot (2) further comprises a cover member (41) disposed to cover the opening for electromagnetic shielding.

5. The robot (2) according to claim 1 or 2, **characterized in that:**
a first insulating member (8a, 66a), an active shield (8b, 66b), and a second insulating member (8c, 66c) are provided for the detection electrode (8d, 66d); and
the first insulating member (8a, 66a), the active shield (8b, 66b), the second insulating member (8c, 66c), and the detection electrode (8d, 66d) are layered in this order from a side of the housing (20, 60).

6. The robot (2) according to claim 1 or 2, **characterized in that:**
the housing (20, 60) has a hole (25, 65); and
the cable (22, 62) is led from inside the space to outside the space via the conduit (33, 73) and through the hole (25, 65).
